Europäisches Patentamt

European Patent Office

Office européen des brevets

(19)

(11) Veröffentlichungsnummer : **0 153 738**
**B1**

(12) **EUROPÄISCHE PATENTSCHRIFT**

(45) Veröffentlichungstag der Patentschrift :
09.11.88

(21) Anmeldenummer : 85102162.6

(22) Anmeldetag : 27.02.85

(51) Int. Cl.⁴ : **G 01 G  3/147,** G 01 G  23/01,
G 01 G  19/00, G 01 G  19/40,
G 01 G  23/37, H 01 R  29/00

(54) Messgerät, insbesondere Waage, mit selbsttätiger Betriebsartumschaltung(Modeumschaltung).

(30) Priorität : 29.02.84 DE 3407463

(43) Veröffentlichungstag der Anmeldung :
04.09.85 Patentblatt 85/36

(45) Bekanntmachung des Hinweises auf die Patenterteilung : 09.11.88 Patentblatt 88/45

(84) Benannte Vertragsstaaten :
CH FR GB IT LI NL

(56) Entgegenhaltungen :
EP-A- 0 081 815
GB-A- 2 041 523
GB-A- 2 074 739

(73) Patentinhaber : August Sauter GmbH
Gartenstrasse 86
D-7470 Albstadt 1-Ebingen (DE)

(72) Erfinder : Mürdter, Herbert
Rossbergstrasse 63
D-7470 Albstadt 2 (DE)
Erfinder : Hermann, Bernhard
Schillerstrasse 8
D-7464 Schömberg 1 (DE)
Erfinder : Pfister, Johann
Kranichstrasse 1
D-7460 Balingen 12 (DE)

(74) Vertreter : Patentanwälte Leinweber & Zimmermann
Rosental 7/II Aufg.
D-8000 München 2 (DE)

EP 0 153 738 B1

Jouve, 18, rue St-Denis, 75001 Paris, France

## Beschreibung

Die Erfindung betrifft ein Meßgerät, insbesondere Waage, bestehend aus einem Meßsensor (Wägebrücke) und einem mit diesem über eine Anschlußleitung verbindbaren Auswertgerät mit Mikroprozessor, das in mindestens zwei unterschiedlichen Betriebsarten (Modes) betreibbar ist.

Mit der laufenden Steigerung der Leistung eines Mikroprozessors ist es heute einfach möglich, viel Intelligenz in Meßgeräte einzubauen, die weit über die eigentliche Bestimmung eines Meßwertes hinausgeht. Dies gilt auch für Waagen, in die weit über die Aufgabenstellung der eigentlichen Wägung hinausgehende Intelligenz eingebaut werden kann.

Um die Benutzung des intelligenten Gerätes für den Benutzer aber nicht unnötig zu komplizieren und zu erschweren, ist es andererseits von entscheidender Bedeutung, für den Benutzer nur diejenigen Funktionen des Meßgerätes in Erscheinung treten zu lassen und zugänglich zu machen, die für ihn zur eigentlichen Aufgabenlösung, bei einer Waage also für das Wägen notwendig sind. Alle anderen Funktionen und die darüber hinausgehende Intelligenz dürfen den Benutzer nicht stören oder von der eigentlichen Aufgabe ablenken.

Es kommt hinzu, daß bei verschiedenen Meßgeräten und so auch bei Waagen aus eichtechnischen Gründen nur diejenige Betriebsart zugänglich sein darf, die für die Ausführung der Funktion des Meßgerätes notwendig ist. Hingegen dürfen die in der Intelligenz mit vorhandenen Eichhilfen für den Zugriff des Benutzers nicht zugänglich sein. Die unterschiedlichen Betriebsarten oder Modes müssen daher gegenseitig verriegelt beziehungsweise blockierbar sein.

Es ist schon bekannt, bei Geräten mit mehreren Betriebsarten diese Betriebsarten sequentiell abrufbar anzubieten. Hierfür genügt eine Taste. Bei Betätigen der Taste werden die einzelnen Betriebsarten dem Benutzer hintereinander angeboten. Diese Art der Bedienung stellt aber eine mögliche Fehlerquelle dar (beispielsweise Betrieb mit falscher Betriebsart), kompliziert die Bedienung für den Benutzer und ist überdies bei bestimmten Geräten, so auch bei Waagen häufig eichtechnisch gar nicht zulässig.

Aufgabe der Erfindung ist es deshalb, bei einem Meßgerät der eingangs genannten Art dafür zu sorgen, daß bei betriebsbereiter Zusammenstellung des Gerätes dieses selbsttätig und zwangsläufig in der richtigen Betriebsart ist.

Diese Aufgabe wird durch die kennzeichnenden Merkmale des Anspruchs 1 gelöst. Die jeweilige Betriebsart des Meßgerätes wird somit durch das Ein- beziehungsweise Ausstecken und/oder die Art der Anschlußleitung definiert. Die Anschlußleitung kann dabei ein Verbindungskabel sein, für dessen Stecker am Auswertgerät eine Steckbuchse vorhanden ist.

Hierbei wird also von der eingangs genannten üblichen Auslegung solcher Geräte Gebrauch gemacht, die ein Verbindungskabel oder doch eine Anschlußleitung aufweisen. Es ist nun nicht mehr notwendig, irgend eine Bedienungstaste im Bedienungsfeld des Auswertgerätes richtig zu betätigen. Stattdessen ist es voll ausreichend, das Meßgerät, beispielsweise eine Waage mit der Wägebrücke über das übliche Verbindungskabel zu verbinden. Durch diese in jedem Fall erforderliche Maßnahme wird selbsttätig die normale Betriebsart (Betriebsart Wägen) an der Intelligenz des Auswertgerätes aufgerufen. Dies geschieht also ohne zusätzlichen Aufwand auf einfache Art zwangsläufig. Es geschieht überdies zuverlässig irrungsfrei, da durch die geschilderte Auslegung das Gerät im betriebsbereiten Zustand selbsttätig in der für den Benutzer allein zugänglich zu machenden normalen Betriebsart ist. Der Kern des Gedankens liegt dabei darin, diese Betriebsart über die Anschlußleitung beziehungsweise das Verbundungskabel selbsttätig auszuwählen. Selbstverständlich gilt umgekehrt ebenso, daß bei unterbrochener Anschlußleitung beziehungsweise abgezogenem Verbindungskabel selbsttätig eine andere Betriebsart zur Verfügung gestellt wird. Dies wird unten noch näher erläutert.

Der Anschluß beziehungsweise die Steckbarkeit kann hardware-mäßig oder auch software-mäßig erfolgen. In letzterem Fall geschieht dies über einen Austausch von Kennungen oder Codenummern, die in der Wägebrücke beziehungsweise im Auswertgerät abgelegt sind.

Die Verbindung von Stecker und Steckbuchse, durch die der Normalbetrieb (Betriebsart Wägen) festgelegt wird, ist zweckmäßig durch eine Plombe abgesichert. Dadurch wird sichergestellt, daß nach vorgenommener Eichung noch durch den Eichbeamten die von ihm geeichte Verbindung von Wägebrücke und Auswertgerät festgelegt werden kann. Es ist dann nur unter Bruch der Eichplombe möglich, beispielsweise eine andere Wägebrücke mit anderen Kenndaten (Höchstlasten, Teilungen) an das Auswertgerät anzuschließen oder umgekehrt. Dies soll auch unterbunden werden, weil hierdurch die Eichung verloren gehen würde. Dies ist durch die Plombe zuverlässig verhindert.

Es soll aber möglich sein, für das Eichen oder Servicearbeiten auch andere Betriebsarten aufzurufen. Hierfür gibt es verschiedene Möglichkeiten.

So kann nach Lösen der Anschlußleitung beziehungsweise Abziehen des Verbindungskabels (gegebenenfalls unter Abtrennung der Eichplombe) zwischen den Stecker am Ende des Verbindungskabels und die Buchse am Auswertgerät ein kleines Adapterstück in Form eines Zwischensteckers eingesteckt werden. Dieses verbindet nach dem Wiederzusammenstecken bestimmte Pins des Steckers auf bestimmte Buchsenkontakte derart, daß damit selbsttätig eine andere Betriebsart aufgerufen wird, beispielsweise ein Eich- oder ein Service-Programm.

Daneben oder zusätzlich ist es möglich, das Auswertgerät auch so auszulegen, daß es bei nicht angeschlossenem Meßsensor, also bei gezogenem Verbindungskabel nach dem Einschalten selbsttätig eine andere als die normale Betriebsart, als die das Wägen anzusehen ist, aufweist. Beispielsweise kann hier wieder selbsttätig das Service-Programm aufgerufen sein.

Auch ist es möglich, mit dem Ausstecken und Wiedereinstecken des Verbindungskabels zusätzlich zum Einschalten wiederum die Auswahl einer besonderen Betriebsart selbsttätig zu veranlassen. Dabei kann es sich beispielsweise um das Eich-Programm handeln.

Es liegt also auf der Hand, daß etwa nach dem Einschalten des von der Wägebrücke getrennten Auswertgerätes zunächst das Service-Programm selbsttätig zur Verfügung steht und für Wartungsarbeiten oder Inbetriebnahmearbeiten benützt werden kann. Wird sodann die Wägebrücke über das Verbindungskabel an das Auswertgerät·angeschlossen, so steht wiederum selbsttätig das Eich-Programm zur Verfügung und erlaubt es, die entsprechenden Arbeiten durchzuführen. Danach kann der Anschluß des Verbindungskabels plombiert werden. Wird nun das Gerät ausgeschaltet und danach neuerlich wiedereingeschaltet, so steht für den Benutzer selbsttätig die normale Betriebsart, nämlich das Wäge-Programm zur Verfügung. All dies wird durch die bloße Gerätebetätigung und Zusammenstellung selbsttätig und irrungsfrei erreicht, wodurch bei voller Auswertung der zur Verfügung gestellten hohen Geräteintelligenz eine hohe Bedienungseinfachheit und -sicherheit gerantiert ist.

Weitere Einzelheiten, Vorteile und Merkmale der Erfindung ergeben sich aus der folgenden Beschreibung der Figuren, auf die wegen der Offenbarung aller hier unten nicht näher erläuterten Einzelheiten ausdrücklich verwiesen wird. Es zeigen

Fig. 1 perspektivisch Auswertgerät und Wägebrücke mit Verbindungskabel je für sich,

Fig. 2 Auswertgerät und über das Verbindungskabel angeschlossene Wägebrücke in Funktion, und

Fig. 3 Auswertgerät und Wägebrücke mit über einen Zwischenstecker anzuschließendem Verbindungskabel zur Betätigung in einer anderen Betriebsart.

Es ist heute üblich, bei Waagen zwischen verschiedenen Betriebsarten oder « Modes » zu unterscheiden. In jedem Mode wird ein bestimmtes Programm durch einen in einem Auswertgerät 10 untergebrachten Mikroprozessor zur Verfügung gestellt. Bei Waagen sind beispielsweise folgende Betriebsarten üblich :

1. Wägen (Nullstellung, Tarieren, Gewichtsanzeige, Gewichtsausgabe)

2. Konfektionieren (Einstellung Höchstlast, Teilung, Mindestlast, länderspezifische Eichvorschriften)

3. Service und Diagnose (Test, Fehlerregistrierung, Fehlerdiagnose)

4. Zusatzanwendungen (wie Zählen, Dosieren, Summierwägen, Checkweigher etc.)

Diese Betriebsarten sind im allgemeinen voneinander unabhängig und stellen jeweils für eine bestimmte Anwendung ausgelegte Aufgabenlösungen dar. Sie werden zu unterschiedlichen Betriebszeiten von unterschiedlichen Personen (Benutzer, Servicetechniker, Anwender) benötigt. Die selbsttätige Auswahl dieser Betriebsarten wird unten näher erläutert.

Das Auswertgerät 10 weist einen Ein- Aus-Schalter 12, ein Tastenfeld 14 zur Eingabe der Betriebsbefehle und ein Anzeigefeld 16 auf. Die Tasten des Tastenfeldes 14 sind je nach der Betriebsart für die Eingabe unterschiedlicher Befehle bestimmt. Ebenso kann die Anzeige im Anzeigefeld 16 den unterschiedlichen Betriebsarten angepaßt sein. Das Auswertgerät weist überdies eine Steckbuchse 18 auf.

Üblicherweise ist das Auswertgerät mit einer separaten Wägebrücke 20 kombiniert. Diese wird am Auswertgerät 10 über ein Verbindungskabel 22 angeschlossen. Das Verbindungskabel 22 ist im allgemeinen mit der Wägebrücke 20 fest verbunden und weist an seinem Ende einen Stecker 24 auf, der zum Einführen in die Steckbuchse 18 des Auswertgerätes 10 bestimmt ist.

Die Auslegung ist nun derart, daß dann, wenn
- der Stecker 24 in die Steckbuchse 18 eingeführt wird und
- anschließend der Ein- Aus-Schalter 12 des Auswertgerätes 10 derart betätigt wird, daß das Auswertgerät 10 in Betrieb genommen wird,
selbsttätig die Betriebsart « Wägen » angeboten wird. Es haben dann alle Tasten des Tastenfeldes 14 die für den Benutzer in der Betriebsart « Wägen » notwendige Funktion.

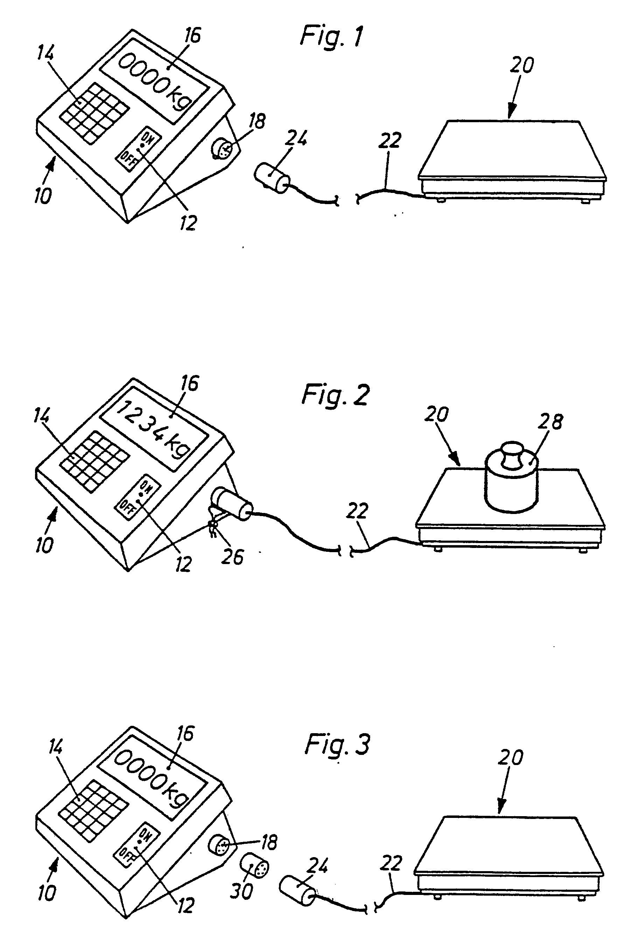

Um diese Betriebsart, bei der es sich um die normale Betriebsart handelt, auf Dauer zur Verfügung zu stellen und zuverlässig abzusichern, wird die Verbindung von Steckbuchse 18 und Stecker 24 mit einer Eichplombe 26 abgesichert, wie das in Figur 2 gezeigt ist.

Wird in diesem Zustand eine Last 28 auf die Wägeplattform der Wägebrücke 20 aufgestellt, so kann im Anzeigefeld 16 das Gewicht der Last 28 angezeigt werden.

Soll nunmehr das Gerät beispielsweise gewartet werden, so genügt es, die Eichplombe 26 zu lösen und das Verbindungskabel 22 durch Abziehen des Steckers 24 von der Steckbuchse 18 vom Auswertgerät 10 abzutrennen. Nach Einschalten des Ein- Aus-Schalters 12 (Netzschalter) durchläuft dann die Waage selbsttätig ein anderes Programm, eben das Service-Programm. Die Tasten des Tastenfeldes 14 haben nunmehr andere Bedeutungen und beziehen sich auf den neuen Programmablauf (z. B. Quittungstasten bei abfragenden Programmen).

Selbstverständlich kann die Auslegung auch so erfolgen, daß bei abgezogenem Verbindungskabel 22 das Auswertgerät in der Betriebsart « Konfektionieren » betrieben werden kann.

Unabhängig von der vorgewählten Betriebsart ist in Fig. 1 diese Möglichkeit der Betriebsweise des Auswertgerätes 10 angedeutet, die ohne Anschluß der Wägebrücke 20 über das Verbindungskabel 22 erfolgt.

Fig. 3 zeigt eine andere Möglichkeit der Änderung der Betriebsart gegenüber der normalen Betriebsart « Wägen » von Fig. 2. Hier ist zwischen Steckbuchse 18 und Stecker 24 des Verbindungskabels 22 ein Zwischenstecker 30 gezeigt. Der Zwischenstecker 30 stellt einen Adapter dar, der bei Einfügung zwischen Steckbuchse 18 und Stecker 24 und neuerlichem Zusammenstecken eine gegenüber dem Normalbetrieb abgewandelte Art der Verbindung gewährleistet, die wiederum zur Auswahl einer anderen Betriebsart, beispielsweise der Betriebsart « Konfektionieren » führt. In dieser ist es möglich, die gesamte Waage aus Auswertgerät 10 und Wägebrücke 20 auf eine andere Höchstlast oder andere Parameter einzustellen. Ist dies geschehen und der Abgleich zwischen Anzeigegerät und Wägebrücke und damit der Vorgang des Konfektionierens beendet, so wird der Zwischenstecker 30 wieder herausgenommen, der Stecker 24 unmittelbar in die Steckbuchse 18 eingefügt, und die Verbindung plombiert. Nach dem Wiedereinschalten des Auswertgerätes 10 steht dieses dann in der Betriebsart « Wägen » mit den neuen Vorgaben für den Benutzer zur Verfügung.

In der Praxis geschieht dies wie folgt : Die Waage werde zum ersten Mal neu aufgestellt, die Wägebrücke 20 erstmals an das Auswertgerät 10 angeschlossen. Wird hierbei in der Konfiguration nach Fig. 1, also ohne in die Steckbuchse 18 eingestecktem Stecker 24 das Gerät über den Schalter 12 eingeschaltet, so befindet sich das Auswertgerät 10 selbsttätig in der Betriebsart « Konfektionierung ». Hieran ändert sich nichts, wenn nunmehr das Verbindungskabel 22 zur Wägebrücke 20 eingesteckt, das Auswertgerät 10 jedoch in seinem eingeschalteten Zustand belassen wird. Die Wägebrücke 20 ist aber nunmehr mit dem Auswertgerät 10 verbunden, so daß das Konfektionierungsprogramm sequentiell ablaufen kann, indem der Mikroprozessor vom Aufsteller die einzelnen Parameter wie Höchstlast, Teilung etc. nach den jeweiligen Vorgaben abfragt. Der Aufsteller quittiert an den Tasten des Tastenfeldes 14 mit Eingaben wie « ja », « nein » oder « weiter ».

Soll zum Beispiel eine 100-kg-Waage konfektioniert werden und ruft das Konfektionierungsprogramm der Reihe nach die möglichen Höchstlasten auf, also zum Beispiel 10 kg, 50 kg, 100 kg, 200 kg, 500 kg etc., dann würde der Aufsteller bei Aufruf vom 100 kg die Taste « ja » drükken. Das Mikroprozessorsystem erkennt dadurch, daß eine 100 kg-Waage angeschlossen ist. Das Mikroprozessorsystem würde anschließend zum Abfragen der Teilung übergehen.

So können die einzelnen Parameter der Wägebrücke 20 dem Auswertgerät 10 eingegeben und dort abgespeichert werden. Sind in diesem Sinne Wägebrücke 20 und Auswertgerät 10 vollständig abgeglichen und angepaßt, dann wird die Eichplombe 26 angebracht. Wird nun die Waage ausgeschaltet und sofort oder zu einem späteren Zeitpunkt für das Wägen wieder eingeschaltet, dann ist bei Wiedereinschaltung durch das Vorliegen der Verbindung des Auswertgerätes 10 über das Verbindungskabel 22 mit der Wägebrücke 20 das Gerät selbständig in der Betriebsart « Wägen ». Weiter sind die Tasten des Tastenfeldes 14 dabei selbständig auf die Funktionen programmiert, die für den Benutzer oder Anwender vorgesehen sind (Nullstellung, Tara, Testtaste etc.).

**Patentansprüche**

1. Meßgerät, insbesondere Waage, bestehend aus einem Meßsensor (Wägebrücke 20) und einem mit diesem über eine Anschlußleitung verbindbaren Auswertgerät (10) mit Mikroprozessor, das in mindestens zwei unterschiedlichen Betriebsarten (modes) betreibbar ist, dadurch gekennzeichnet, daß die jeweilige Betriebsart des Meßgerätes durch das Anschließen der beziehungsweise das Trennen von der Anschlußleitung und/oder die Art der Anschlußleitung definiert wird.

2. Meßgerät nach Anspruch 1, dadurch gekennzeichnet, daß die Anschlußleitung ein Verbindungskabel (22) ist, für dessen Stecker (24) am Auswertgerät (10) eine Steckbuchse (18) vorhanden ist.

3. Meßgerät nach Anspruch 2, dadurch gekennzeichnet, daß der Stecker (24) und die Steckbuchse (18) für den Normalbetrieb (Betriebsart « Wägen ») unmittelbar verbunden sind (Fig. 2).

4. Meßgerät nach Anspruch 3, dadurch gekennzeichnet, daß die Verbindung von Stecker (24) und Steckbuchse (18) durch eine Plombe (26) absicherbar ist.

5. Meßgerät nach einem der Ansprüche 1 bis 4, dadurch gekennzeichnet, daß für andere als die normale Betriebsart zwischen Stecker (24) und Steckbuchse (18) ein entsprechend kodierter Zwischenstecker (30) einfügbar ist (Fig. 3).

6. Meßgerät nach einem der Ansprüche 1 bis 5, dadurch gekennzeichnet, daß sich das Auswertgerät (10) nach dem Einschalten bei nicht angeschlossenem Meßsensor in einer anderen als der normalen Betriebsart befindet.

7. Meßgerät nach Anspruch 6, dadurch gekennzeichnet, daß sich das Auswertgerät (10) nach dem Einschalten und dem Ausstecken und Wiedereinstecken des Verbindungskabels (22) zum Meßsensor ebenfalls in einer anderen als der normalen Betriebsart befindet.

**Claims**

1. Measuring device, particularly scales, comprising a measuring sensor (weighing bridge 20) and an evaluating apparatus (10) which can be connected to it via a connecting lead and which has a microprocessor, and wherein the measuring device can be operated in at least two different operational types (modes), characterised in that the respective operational type of the measuring device is defined by connecting or disconnecting the connecting lead and/or by the type of connecting lead.

2. Measuring device according to claim 1, characterised in that the connecting lead is a connecting cable (22), a plug socket (18) for its plug (24) being provided on the evaluating apparatus (10).

3. Measuring device according to claim 2, characterised in that the plug (24) and the plug socket (18) are directly connected (Fig. 2) for the normal operation (operational type « weighing »).

4. Measuring device according to claim 3, characterised in that the connection of the plug (24) and plug socket (18) can be made safe by a lead seal (26).

5. Measuring device according to one of claims 1 to 4, characterised in that a correspondingly coded adapter plug (30) can be inserted between the plug (24) and plug socket (18) for an operational type other than the normal one (Fig. 3).

6. Measuring device according to one of claims 1 to 5, characterised in that after switching-on when the measuring sensor is not connected, the evaluating apparatus (10) is in an operational type other than the normal one.

7. Measuring device according to claim 6, characterised in that after switching-on and unplugging and reconnecting of the connecting cable (22) to the measuring sensor, the evaluating apparatus (10) is also in an operational type other than the normal one.

**Revendications**

1. Appareil de mesure, en particulier balance, consistant en un capteur de mesure (plateau de balance 20) et en un appareil d'exploitation (10) à microprocesseur reliable au précédent par l'intermédiaire d'une ligne de connexion, qui peut être utilisé selon au moins deux modes de fonctionnement différents, caractérisé en ce que chaque mode de fonctionnement de l'appareil d'exploitation est défini par le raccordement, respectivement la séparation de la ligne de connexion et/ou par le type de la ligne de connexion.

2. Appareil de mesure selon la revendication 1, caractérisé en ce que la ligne de connexion est un câble de liaison (22) pour la prise mâle (24) duquel est prévue sur l'appareil d'exploitation (10) une prise femelle (18).

3. Appareil de mesure selon la revendication 2, caractérisé en ce que la prise mâle (24) et la prise femelle (18) sont reliées directement (figure 2) pour le fonctionnement normal (mode de fonctionnement « pesée »).

4. Appareil de mesure selon la revendication 3, caractérisé en ce que la liaison de la prise mâle (24) et de la prise femelle (18) est protégée par un sceau de plomb (26).

5. Appareil de mesure selon l'une des revendications 1 à 4, caractérisé en ce qu'une prise intermédiaire (30) codée de façon correspondante peut être insérée (figure 3) entre la prise mâle (24) et la prise femelle (18) pour d'autres modes de fonctionnement que le mode de fonctionnement normal.

6. Appareil de mesure selon l'une des revendications 1 à 5, caractérisé en ce que l'appareil d'exploitation (10) se trouve, après mise en marche sans raccordement du capteur de mesure, dans un mode de fonctionnement différent du mode de fonctionnement normal.

7. Appareil de mesure selon la revendication 6, caractérisé en ce que l'appareil d'exploitation (10) se trouve également dans un autre mode de fonctionnement que le mode de fonctionnement normal après qu'il a été mis en marche et après débranchement et rebranchement du câble de liaison (22) avec le capteur de mesure.

Fig. 1

Fig. 2

Fig. 3